# EUROPEAN PATENT SPECIFICATION

(11) **EP 4 158 255 B1**
(45) Date of publication and mention of the grant of the patent: **08.04.2026**
(21) Application number: 21737341.4
(22) Date of filing: 25.05.2021
(51) Int. Cl.: F24D 10/00, F24D 19/10

(54) **CONTROLLING OF A DISTRICT THERMAL ENERGY DISTRIBUTION SYSTEM**
STEUERUNG EINES REGIONALEN WÄRMEENERGIEVERTEILUNGSSYSTEMS
COMMANDE D'UN SYSTÈME DE DISTRIBUTION DE CHAUFFAGE THERMIQUE URBAIN

(30) Priority: 26.05.2020 EP 20176559
(43) Date of publication of application: 05.04.2023
(73) Proprietor: E.ON Sverige AB, 205 09 Malmö (SE)
(72) Inventor: LINDOFF, Bengt, 237 35 Bjärred (SE); ROSÉN, Per, 227 33 Lund (SE); SKOGSTRÖM, Jacob, 234 42 Lomma (SE); CARLSTRÖM, Helen, 237 36 Bjärred (SE)
(74) Representative: AWA Sweden AB
(86) International application number: PCT/EP2021/063797
(87) International publication number: WO 2021/239681

(56) References cited:
- EP-A1- 3 587 949
- WO-A1-2010/145040
- DE-U1- 202012 103 891
- GB-A- 2 522 025

## Description

### Technical field

The present invention relates to controlling of a district thermal energy distribution system, especially it relates to controlling a set of heat pumps and/or a set of cooling machines connected to the district thermal energy distribution system as response to operation of another heat pump and/or cooling machine connected to the thermal energy distribution system. The set of heat pumps may comprise one or more heat pumps. The set of cooling machines may comprise one or more cooling machines.

### Background

Nearly all large developed cities in the world have at least two types of energy grids incorporated in their infrastructures; one grid for providing electrical energy and one grid for providing space heating and hot tap water preparation. Today a common grid used for providing space heating and hot tap water preparation is a gas grid providing a burnable gas, typically a fossil fuel gas. The gas provided by the gas grid is locally burned for providing space heating and hot tap water. An alternative for the gas grid for providing space heating and hot tap water preparation is a district heating grid. Also, the electrical energy of the electrical energy grid may be used for space heating and hot tap water preparation. Also, the electrical energy of the electrical energy grid may be used for space cooling. The electrical energy of the electrical energy grid is further used for driving refrigerators and freezers.

Accordingly, traditional building heating and cooling systems use primary high-grade energy sources such as electricity and fossil fuels or an energy source in the form of industrial waste heat to provide space heating and/or cooling, and to heat or cool water used in the building. Furthermore, it has been increasingly common to also install a district cooling grid in cities for space cooling. The process of heating or cooling the building spaces and water converts this high-grade energy into low grade waste heat with high entropy which leaves the building and is returned to the environment.

Hence, there is a need for improvements in how to provide heating and cooling to a city.

EP 3 587949A1 discloses a controller configured to selectively set a reversible heat pump assembly in either a heating mode or in a cooling mode is presented. The controller comprising a control circuit configured to: for a time period, determine, using a demand determining function, a heating demand for heat from one or more local heating circuits connected to the reversible heat pump assembly and a cooling demand for cold from one or more local cooling circuits connected to the reversible heat pump assembly; generate, using a control function, a control signal indicative of if the reversible heat pump assembly is to be set in either the heating mode or in the cooling mode, wherein the control function is configured to use the heating demand and the cooling demand as input data; and send, using a transmission function, the control signal to a heat pump of the reversible heat pump assembly. Also a method for controlling the reversible heat pump assembly is presented.

WO 2010/145040 A1 discloses a district energy sharing system comprising a thermal energy circuit which circulates and stores thermal energy in water, at least one client building thermally coupled to the circuit and which removes some thermal energy from the circuit ("thermal sink") and/or deposits some thermal energy into the circuit ("thermal source"), and at least one thermal server plant that can be thermally coupled to external thermal sources and/or sinks (e.g. a geothermal ground source) and whose function is to maintain thermal balance within the district energy sharing system.

DE 20 2012 103891 U1 discloses a supply network comprising bidirectional subscriber interfaces connected to subscribers and auxiliary equipment interfaces for power connected additional devices are provided with power consumption or supply characteristics. A main memory is provided for network and is directly connected to various external energy sources. Power sensors are provided to capture energy data on all interfaces. A central controller is provided to control bidirectional ports and devices at subscribers.

GB 2 522 025 A discloses a district thermal energy network interconnecting a plurality of thermal loads such as buildings having heating and cooling systems. An energy unit, which may be a geothermal, solar, nuclear, hydro-electric or heat pump unit or a boiler, hot water tank or CHP system, is capable of operating as a heat source or a heat sink. The network also has a primary circuit having an upstream flow line and a downstream return line that includes a primary pump to deliver working fluid from the energy unit along the circuit. Each of the thermal loads has a respective user circuit connected to the primary circuit by a respective connection. A switchable valve system for each thermal load selectively connects the user circuit to the primary circuit in a selected working fluid direction along the connection so that the primary circuit can selectively function as a heat source or a heat sink for the user circuit.

### Summary of the invention

It is an object of the present invention to solve at least some of the problems mentioned above.

According to a first aspect a method for controlling a district thermal energy distribution system is provided, as defined in claim 1. The thermal energy distribution system comprises:
a distribution grid for a fluid-based distribution of heating and cooling, the distribution grid comprising a hot conduit configured to allow heat transfer fluid of a first temperature to flow therethrough and a cold conduit configured to allow heat transfer fluid of a second temperature to flow therethrough, the second temperature is lower than the first temperature; a control server; a plurality of heat pumps connected to the distribution grid, each heat pump being configured to transfer heat from a primary side thereof to a secondary side thereof, the primary side being configured to allow a flow of heat transfer fluid from the hot conduit of the distribution grid to the cold conduit of the distribution grid, and the secondary side being configured to allow heat transfer fluid of a local heating circuit to flow therethrough; and a plurality of cooling machines connected to the distribution grid, each cooling machines being configured to transfer heat from a secondary side thereof to a primary side thereof, the primary side being configured to allow a flow of heat transfer fluid from the cold conduit of the distribution grid to the hot conduit of the distribution grid, and the secondary side being configured to allow heat transfer fluid of a local cooling circuit to flow therethrough. The method comprises receiving, at the control server, an energy demand for a first heat pump among the plurality of heat pumps or a first cooling machine among the plurality of cooling machines to extract energy from the distribution grid; determining, at the control server, a set of cooling machines among the plurality of cooling machines or a set of heat pumps among the plurality of heat pumps to which a respective control message is to be sent in order to compensate for the energy demand received; generating, at the control server, a respective control message for each cooling machine in the set of cooling machines or a respective control message for each heat pump in the set of heat pumps, wherein the respective control message comprises data instructing the respective cooling machine to extract cold from the distribution grid to compensate, at least partly, for the energy demand for the first heat pump to extract heat from the distribution grid, or comprises data instructing the respective heat pump to extract heat from the distribution grid to compensate, at least partly, for the energy demand for the first cooling machine to extract cold from the distribution grid; and sending, from the control server and to the respective cooling machine or to the respective heat pump, the respective control message.

Hence, the present invention relates to a method for controlling one or more heat pumps connected to a distribution grid for fluid-based distribution of heating and cooling in order to, at least partly, compensate for a cold outtake from the distribution grid by a first cooling machine connected to the distribution grid. Alternatively, or in combination, one or more cooling machines connected to the distribution grid may be controlled in order to, at least partly, compensate for a heat outtake from the distribution grid by a first heat pump connected to the distribution grid. The controlling is made at a control server monitoring outtake of heat and/or cold from the distribution grid by the heat pumps and cooling machines connected to the distribution grid. The control server may generate and send out control messages to the heat pumps and/or cooling machines.

The present method allows for local balancing of heat and cold from the district thermal energy distribution system. This since, in response to a first heat pump being operated to take out heat from the distribution grid, one or more cooling machines may be started and/or instructed to increase its outtake of cold from the distribution grid in order to, at least partly, compensate for the "new" outtake of heat by the first heat pump. Alternatively, or in combination, in response to a first cooling machine being operated to take out cold from the distribution grid, one or more heat pumps may be started and/or instructed to increase its outtake of heat from the distribution grid in order to, at least partly, compensate for the "new" outtake of cold by the first cooling machine. Hence, the present method allows for balancing heat and cold outtake from heat pumps/cooling machines within a sub-portion of the district thermal energy distribution system. The present method may e.g. be used in situations when a thermal server plant connected to the distribution grid have problems delivering heat and/or cold to the distribution grid. Moreover, present method may e.g. be used in situations when a sub-portion of the distribution grid may be disconnected from the rest of the distribution grid or when there occur bottlenecks in the distribution grid. According to the present method one or more cooling machines may be run as heat generating devices for providing a heat pump with heat. Vice versa, in one or more heat pumps may be run as cold generating devices for providing a cooling machine with cold.

Further, the present method allows for different portions of the distribution grid to operate at different heat transfer fluid temperatures depending on local thermal needs in the different portions of the distribution grid. This may create improved local balancing. For example, different portions of the distribution grid may be set to operate with different heat transfer fluid temperatures. This in order to facilitate maximal use of the inertia of the hot and cold conduits and the ground surrounding the hot and cold conduits.

The step of determining the set of cooling machines to which a respective control message is to be sent may be made based on a distance along the distribution grid between a connection of the first heat pump to the distribution grid and a connection of the respective cooling machine to the distribution grid (10). The one or more cooling machines in the set of cooling machines may be selected among the cooling machines being at a distance along the distribution grid shorter than a threshold distance. This allow for the cooling machines closest to the heat pump to be controlled. Hence, improved local balancing may be provided.

The step of determining the set of heat pumps to which a respective control message is to be sent may be made based on a distance along the distribution grid between a connection of the first cooling machine to the distribution grid and a connection of the respective heat pump to the distribution grid. The one or more heat pumps in the set of heat pumps may be selected among the heat pumps being at a distance along the distribution grid shorter than a threshold distance. This allow for the heat pumps closest to the cooling machine to be controlled. Hence, improved local balancing may be provided.

The step of determining the set of cooling machines to which a respective control message is to be sent may be made based on a priority set to each of the plurality of cooling machine. This may for example allow for selecting the one or more cooling machines to be controlled based on importance. Highly prioritized cooling machine may for example not be controllable at all.

The step of determining the set of heat pumps to which a respective control message is to be sent may be made based on a priority set to each of the plurality of heat pumps. This may for example allow for selecting the one or more heat pumps to be controlled based on importance. Highly prioritized heat pumps may for example not be controllable at all.

The step of determining the set of cooling machines to which a respective control message is to be sent may be made based on geographic location data pertaining to the first heat pump. Allowing for sectorizing the distribution grid into geographic sectors. For example, the one or more cooling machines in the set of cooling machines may be selected among the cooling machines being within a threshold radius of geographic distance from the first heat pump.

The step of determining the set of heat pumps to which a respective control message is to be sent may be made based on geographic location data pertaining to the first cooling machine. Allowing for sectorizing the distribution grid into geographic sectors. For example, the one or more heat pumps in the set of heat pumps may be selected among the heat pumps being within a threshold radius of geographic distance from the first cooling machine.

The set of cooling machines may comprise one or more of the plurality of cooling machines. The set of heat pumps may comprise one or more of the plurality of heat pumps.

The respective control message may comprise an instruction instructing the respective heat pump to increase its outtake of energy, i.e. heat, from the distribution grid independent from its present outtake of energy from the distribution grid.

The respective control message may comprise an instruction instructing the respective cooling machine to increase its outtake of energy, i.e. cold, from the distribution grid independent from its present outtake of energy from the distribution grid.

The method may further comprise receiving the control message and controlling the respective cooling machine or heat pump based thereon. The control message may be received at the respective cooling machine or at the respective heat pump.

According to a second aspect a non-transitory computer-readable storage medium is provided. The non-transitory computer-readable storage medium having stored thereon instructions for implementing the method according to the first aspect, when executed on a device having processing capabilities.

The above-mentioned features of the method, when applicable, apply to this second aspect as well. **In** order to avoid undue repetition, reference is made to the above.

According to a third aspect a control server configured for controlling a district thermal energy distribution system comprising a distribution grid, a plurality of heat pumps and a plurality of cooling machines as defined in claim 1, is provided in claim 11. The control server comprises: a transceiver configured to communicate with the heat pumps and/or cooling machines; and a control circuit. The control circuit is configured to execute an energy demand function configured to determine an energy demand, for a first heat pump among the heat pumps or a first cooling machine among the cooling machines, to extract energy from the distribution grid. The control circuit is further configured to execute a demand compensating function configured to determine a set of cooling machines among the cooling machines or a set of heat pumps among the heat pumps to which a respective control message is to be sent in order to compensate for the energy demand. The demand compensating function is further configured to generate a respective control message to each cooling machine in the set of cooling machines or a respective control message to each heat pump in the set of heat pumps. The respective control message comprises data instructing the respective cooling machine to extract cold from the distribution grid to compensate, at least partly, for the energy demand for the first heat pump to extract heat from the distribution grid. Alternatively, or in combination, the respective control message comprises data instructing the respective heat pump to extract heat from the distribution grid to compensate, at least partly, for the energy demand for the first cooling machine to extract cold from the distribution grid. The control circuit is further configured to execute a messaging function configured to, by means of the transceiver send the respective control message to the respective cooling machine or the respective heat pump.

The above-mentioned features of the method, when applicable, apply to this third aspect as well. In order to avoid undue repetition, reference is made to the above.

According to a fourth aspect a district thermal energy distribution system is provided. The district thermal energy distribution system comprises: a distribution grid for a fluid-based distribution of heating and cooling, the distribution grid comprising a hot conduit configured to allow heat transfer fluid of a first temperature to flow therethrough and a cold conduit configured to allow heat transfer fluid of a second temperature to flow therethrough, the second temperature is lower than the first temperature; a plurality of heat pumps connected to the distribution grid, each heat pump being configured to transfer heat from a primary side thereof to a secondary side thereof, the primary side being configured to allow a flow of heat transfer fluid from the hot conduit of the distribution grid to the cold conduit of the distribution grid, and the secondary side being configured to allow heat transfer fluid of a local heating circuit to flow therethrough; and a plurality of cooling machines connected to the distribution grid, each cooling machines being configured to transfer heat from a secondary side thereof to a primary side thereof, the primary side being configured to allow a flow of heat transfer fluid from the cold conduit of the distribution grid to the hot conduit of the distribution grid, and the secondary side being configured to allow heat transfer fluid of a local cooling circuit to flow therethrough; and a control server according to the third aspect.

The basic idea of the district thermal energy distribution system is based on the insight by the inventors that modern day cities by themselves provide thermal energy that may be reused within the city. The reused thermal energy may be picked up by the district thermal energy distribution system and be used for e.g. space heating or hot tap water preparation. Moreover, increasing demand for space cooling will also be handled within the district thermal energy distribution system. Within the district thermal energy distribution system buildings within the city are interconnected and may in an easy and simple way redistribute low temperature waste energy for different local demands. Amongst other the district thermal energy distribution system will provide for:
- Minimizing the use of primary energy due to optimal re-use of energy flows inside the city.
- Limiting the need for chimneys or firing places inside the city, since the need for locally burning gas or other fuels will be reduced.
- Limiting the need for cooling towers or cooling convectors inside the city, since excess heat produced by cooling devices may be transported away and reused within the district thermal energy distribution system.

Hence, the district thermal energy distribution system provides for a smart duel use of thermal energy within a city. When integrated into a city the district thermal energy distribution system makes use of low-level thermal energy waste in both heating and cooling applications within the city. This will reduce the primary energy consumption of a city by eliminating the need for a gas grid or a district heating grid and a cooling grid in city.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or acts of the methods described as such device and method may vary. **It** is also to be understood that the terminology used herein is for purpose of describing particular embodiments only, and is not intended to be limiting. **It** must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### Brief description of the drawings

The above and other aspects of the present invention will now be described in more detail, with reference to appended figures showing embodiments. The figures should not be considered limiting; instead they are used for explaining and understanding.

As illustrated in the figures, the sizes of layers and regions may be exaggerated for illustrative purposes and, thus, are provided to illustrate the general structures of embodiments. Like reference numerals refer to like elements throughout.
Fig. 1 is a schematic diagram of a district thermal energy distribution system.
Fig. 2 is a schematic diagram of a control server configured to control heat pump(s) and/or cooling machine(s) of the district thermal energy distribution system of Fig. 1.
Fig. 3 is a block scheme of a method for controlling the district thermal energy distribution system of Fig. 1.

### Detailed description

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

### District thermal energy distribution system

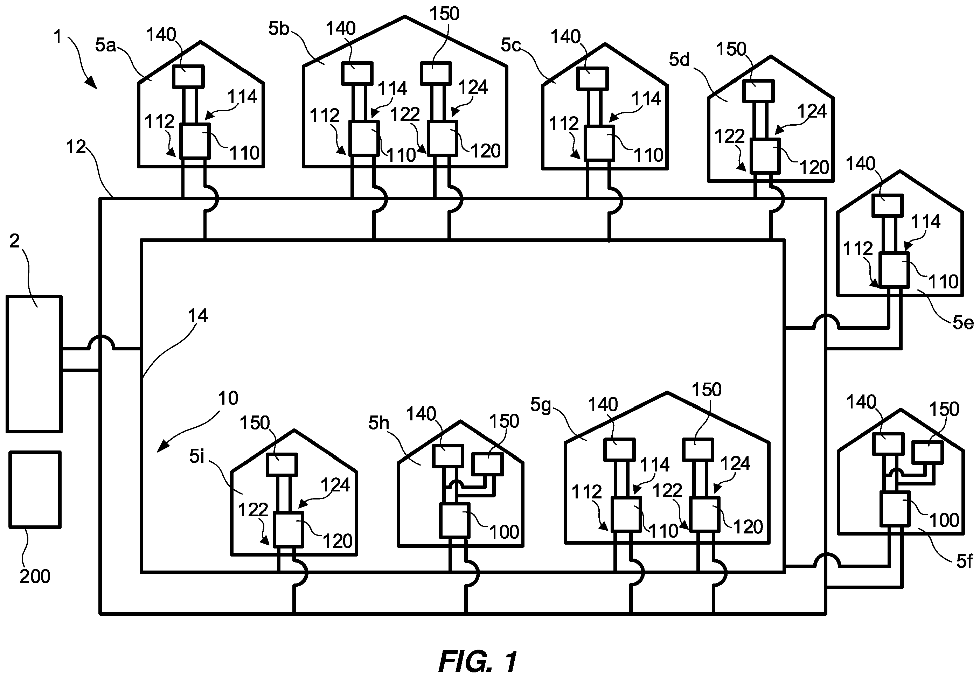

Fig. 1 illustrates a district thermal energy distribution system 1. The district thermal energy distribution system 1 comprises a distribution grid 10 and a plurality of buildings 5. The distribution grid 10 is configured to interconnect the buildings 5 such that thermal energy in the form of heating and/or cooling may be distributed to and/or from the buildings 5. Hence, the distribution grid 10 may be seen as a district thermal energy distribution grid. The plurality of buildings 5 are thermally coupled to the distribution grid 10. The distribution grid 10 is arranged to circulate and store thermal energy in heat transfer fluid flowing through the distribution grid 10. The heat transfer fluid may be a liquid. The heat transfer fluid of the distribution grid 10 may comprise water. However, other heat transfer fluids may alternatively be used. Some non-limiting examples are ammonia, oils, alcohols and anti-freezing liquids, such as glycol. The heat transfer fluid may also comprise a mixture of two or more of the heat transfer liquids mentioned above. A specific mixture to be used is water mixed with an anti-freezing liquid.

The distribution grid 10 comprises two conduits 12, 14 for allowing flow of heat transfer fluid therethrough. The temperature of the heat transfer fluid of the two conduits 12, 14 is set to be different. A hot conduit 12 in the distribution grid 10 is configured to allow heat transfer fluid of a first temperature to flow therethrough. A cold conduit 14 in the distribution grid 10 is configured to allow heat transfer fluid of a second temperature to flow therethrough. The second temperature is lower than the first temperature.

In case heat transfer fluid is water (possibly with added anti-freezing liquid), a suitable temperature range for the hot heat transfer fluid is between 5 and 45°C and a suitable temperature range for the cold heat transfer fluid is between 0 and 40°C. A suitable temperature difference between the first and second temperatures is in the range of 5-16°C, preferably in the range of 7-12°C, more preferably 8-10°C.

Preferably, the system is set to operate with a sliding temperature difference which varies depending on the climate. Preferably, the sliding temperature difference is fixed. Hence, the temperature difference may be set to momentarily slide with a fixed temperature difference.

The hot conduit 12 and the cool conduit 14 are separate. The hot conduit 12 and the cool conduit 14 may be arranged in parallel. The hot conduit 12 and the cool conduit 14 are fluidly interconnected at the buildings 5 for allowing of thermal energy transfer to and from the buildings 5. This will be discussed more in detail further below.

The district thermal energy distribution system 1 may comprise a thermal server plant 2. The thermal server plant 2 functions as an external thermal source and/or thermal sink. The function of the thermal server plant 2 is to maintain the temperature difference between the hot and cold conduits 12, 14 of the distribution grid 10. That is, the thermal server plant 2 may be used for balancing the district thermal energy distribution system 1 such that when the distribution grid 10 reaches a temperature end point the thermal server plant 2 is arranged to inhale or exhale thermal energy to/from the distribution grid 10.

A building 5 comprises at least one of a heat pump 110, a cooling machine 120 and a reversible heat pump assembly 100. One specific building 5 may comprise more than one of a heat pump 110, a cooling machine 120 and a reversible heat pump assembly 100. An example of a reversible heat pump assembly 100 that may be used in connection with the present district thermal energy distribution system 1 is disclosed in WO2019219670 filed by the same applicant as the present application. WO2019219670 is hereby included in this application by reference. The reversible heat pump assembly 100 may be set in either a heating mode, then acting as a heat pump 110, or in a cooling mode, then acting as a cooling machine 120.

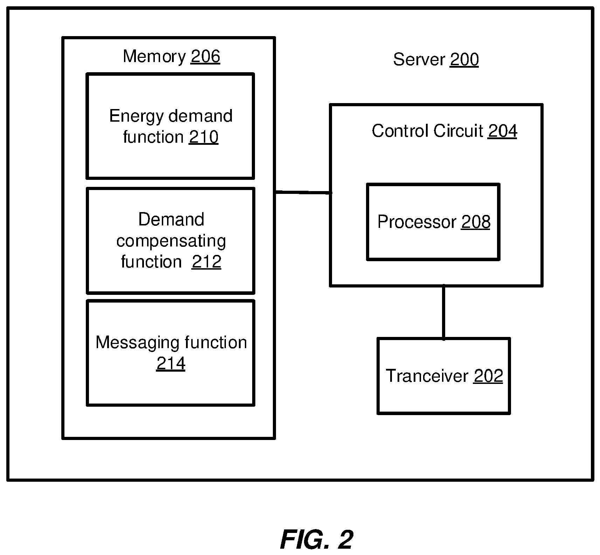

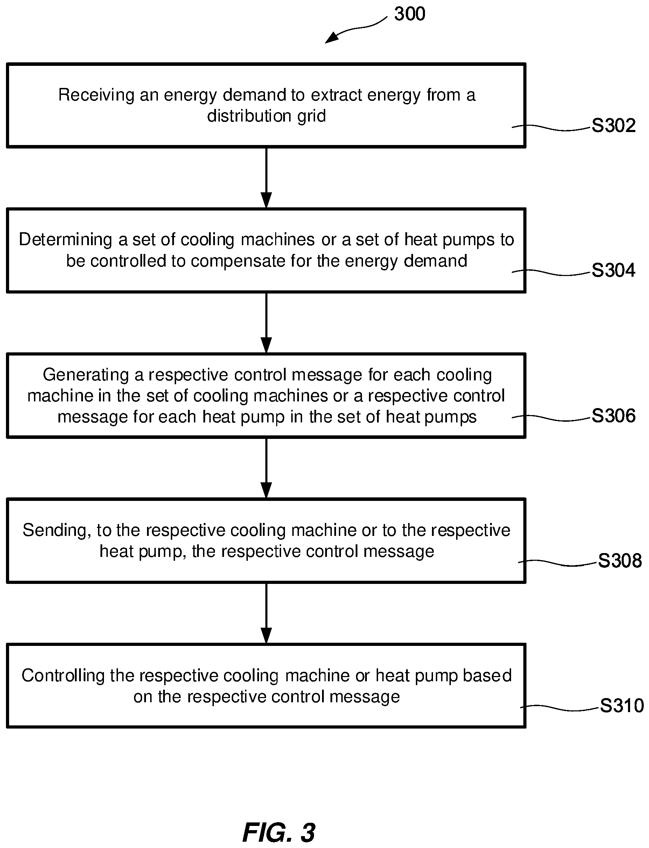

Each heat pump 110 is configured to transfer heat from a primary side 112 thereof to a secondary side 114 thereof. The primary side 112 of the heat pump 110 is connected to the distribution grid 10. The primary side 112 of the heat pump 110 is configured to allow a flow of heat transfer fluid from the hot conduit 12 of the distribution grid 10 to the cold conduit 14 of the distribution grid 10. The secondary side 114 of the heat pump 110 is connected to a local heating circuit 140. The local heating circuit 140 may be a local heating circuit arranged within a building 5. The local heating circuit 140 is configured to allow heat transfer fluid to flow therethrough. The fluid may be a liquid, such as water. The fluid may be a gas, such as air. The heating circuit 140 may be one or more of a comfort heating system, a process heating system, and hot tap water production system. Alternatively, or in combination, the local heating circuit 140 may deliver pool heating or ice- and snow purging. The secondary side 114 of the heat pump 110 is configured to allow heat transfer fluid of the local heating circuit 140 to flow therethrough. Hence, the heat pump 110 is arranged to transfer thermal energy from heat transfer fluid of the distribution grid 10 to heat transfer fluid of the heating circuit 140. This is achieved by transfer of thermal energy from heat transfer fluid taken from the hot conduit 12 to heat transfer fluid of the local heating circuit 140, such that heat transfer fluid returned to the cold conduit 14 has a temperature lower than the first temperature and preferably a temperature equal to the second temperature. Hence, the heat pump 110 may be installed in a building 5 for acting as a provider for heat to one or more local heating circuits 140. Hence, the heat pump 110 is configured to derive heat from heat transfer fluid of the hot conduit 12 and to create a cooled heat transfer fluid flow into the cold conduit 14. The heat pump 110 fluidly interconnects the hot and cool conduits 12, 14 such that hot heat transfer fluid can flow from the hot conduit 12 through the primary side 112 of the heat pump 110 and then into the cold conduit 14 after thermal energy in the heat transfer fluid has been consumed by the heat pump 110. The heat pump 110 operates to draw thermal energy from the hot conduit 12 to heat the local heating circuit 140 and then deposits the cooled heat transfer fluid into the cool conduit 14. The local heating circuit 140 may be configured to send an energy demand to the heat pump 110. The heat pump 110 is configured to extract heat from the distribution grid 10 in accordance with the energy demand. The energy demand may be sent to the heat pump 110 from another entity than the local heating circuit 140. This will be elaborated on further in connection with the discussion on the control server 200 discussed in connection with Fig. 2 and the method discussed in connection with Fig. 3.

Each cooling machine 120 is configured to transfer cold from a primary side 122 thereof to a secondary side 124 thereof. Hence, a cooling machine 120 is configured to transfer heat from a secondary side 124 thereof to a primary side 122 thereof. The primary side 122 of the cooling machine 120 is connected to the distribution grid 10. The primary side 122 of the cooling machine 120 is configured to allow a flow of heat transfer fluid from the cold conduit 14 of the distribution grid 10 to the hot conduit 12 of the distribution grid 10. The secondary side 124 of the cooling machine 120 is connected to a local cooling circuit 150. The local cooling circuit 150 may be a local cooling circuit 150 arranged within a building 5. The local cooling circuit 150 is configured to allow heat transfer fluid to flow therethrough. The heat transfer fluid may be a liquid, such as water. The heat transfer fluid may be a gas such as air. The local cooling circuit 150 may be one or more of a comfort cooling system, a process cooling system, a refrigeration system, and a freezing system. Alternatively, or in combination, the local cooling circuit 150 may deliver cooling for ice rinks and ski centers or ice- and snow making. The secondary side 124 of the cooling machine 120 is configured to allow heat transfer fluid of the local cooling circuit 150 to flow therethrough. Hence, the cooling machine 120 is arranged to deposit thermal energy to the distribution grid 10. Or in other words, the cooling machine 120 is arranged to transfer thermal energy from heat transfer fluid of the local cooling circuit 150 to heat transfer fluid of the distribution grid 10. This is achieved by transfer of thermal energy from heat transfer fluid of the local cooling circuit 150 to heat transfer fluid taken from the cold conduit 12, such that heat transfer fluid returned to the hot conduit 14 has a temperature higher than the second temperature and preferably a temperature equal to the first temperature. Hence, a cooling machine 120 may be installed in a building 5 for acting as a provider for cooling to one or more local cooling circuits 150. The cooling machine 120 is configured to derive cooling from heat transfer fluid of the cold conduit 14 and to create a heated heat transfer fluid flow into the hot conduit 12. Hence, the cooling machine 120 fluidly interconnects the cold and hot conduits 14, 12 such that cold heat transfer fluid can flow from the cold conduit 14 through the primary side 122 of the cooling machine 120 and then into the hot conduit 12 after thermal energy has been deposited into the heat transfer fluid by the cooling machine 120. The cooling machine 120 operates to extract heat from the cooling circuit 150 and deposits that extracted heat into the hot conduit 12. The local cooling circuit 150 may be configured to send an energy demand to the cooling machine 120. The cooling machine 120 is configured to extract cold from the distribution grid 10 in accordance with the energy demand. The energy demand may be sent to the cooling machine 120 from another entity than the local cooling circuit 150. This will be elaborated on further in connection with the discussion on the control server 200 discussed in connection with Fig. 2 and the method discussed in connection with Fig. 3.

As an alternative to a heat pump 110 and a cooling machine 120 a reversible heat pump assembly 100 may be used. The reversible heat pump assembly 100 may at one time interval be set in a heating mode, i.e. acting as a heat pump, and at another time interval be set in a cooling mode, i.e. acting as a cooling machine. The time intervals do not overlap. Hence, the reversible heat pump assembly 100 may selectively be set as either a heat pump or a cooling machine. The reversible heat pump assembly 100 is configured to be connected to the distribution grid 10. The reversible heat pump assembly 100 is configured to be connected to a heating circuit 140. The reversible heat pump assembly 100 is configured to be connected to a cooling circuit 150. Upon the reversible heat pump assembly 100 is set in the heating mode it functions as a heat pump 110 discussed above. Upon the reversible heat pump assembly 100 is asset in the cooling mode it functions as a cooling machine 120 discussed above.

### Control Server

As discussed above, the district thermal energy distribution system 1 further comprises a control server 200. The control server 200 may be any type of server comprising a processing unit. The control server 200 may physically comprise one single server device. Alternatively, the control server 200 may be distributed over several server devices. The control server 200 may be comprised in thermal server plant 2, or at any other suitable location. The control server 200 may be configured to communicate with the thermal server plant 2. The control server 200 is further configured to communicate with the heat pumps 110, the cooling machines 120 and/or the reversible heat pump assemblies 100 of the district thermal energy distribution system 1. The control server 200 may communicate with the thermal server plant 2, the heat pumps 110, the cooling machines 120 and/or the reversible heat pump assemblies 100 via a dedicated network, over the Internet, or a combination thereof. The communication in the dedicated network or the Internet may be wireless and/or wired. The control server 200 may be a central control server, "central" in the sense that it may handle data for a plurality of the heat pumps 110, the cooling machines 120 and/or the reversible heat pump assemblies 100. The control server 200 is configured to send a control message to one or more of the heat pumps 110, the cooling machines 120 and/or the reversible heat pump assemblies 100.

A more detailed schematic of the control server 200 is schematically shown in connection with Fig. 2. The control server 200 comprises a transceiver 202, a control circuit 204 and a memory 206.

The transceiver 202 may be configured to communicate with the thermal server plant 2. The transceiver 202 is further configured to communicate with the heat pumps 110, the cooling machines 120 and/or the reversible heat pump assemblies 100. The transceiver 202 is configured to communicate individually with the heat pumps 110, the cooling machines 120 and/or the reversible heat pump assemblies 100. Hence, the transceiver 202 enables the control server 200 to establish communications with other device, such as the heat pumps 110, the cooling machines 120, the reversible heat pump assemblies 100, and/or the thermal server plant 2. That said, each of the heat pumps 110, the cooling machines 120, the reversible heat pump assemblies 100, and the thermal server plant 2 also comprises a respective transceiver for communicating with the control server 200. The communications may include data transfers, and the like. Data transfers may include, but are not limited to, downloading and/or uploading data and receiving or sending messages. The data may be processed by the control server 200, the thermal server plant 2 and/or each of the heat pumps 110, the cooling machines 120, and the reversible heat pump assemblies 100. Hence, the thermal server plant 2 and each the heat pumps 110, the cooling machines 120, and the reversible heat pump assemblies 100 may comprise an associated control unit configured to control the operation of the respective device it is associated with. The processing may include storing the data in a memory, executing operations or functions, and so forth.

The control circuit 204 is configured to carry out overall control of functions and operations of the control server 200. The control circuit 204 may include a processor 208, such as a central processing unit (CPU), microcontroller, or microprocessor. The processor 208 is configured to execute program code stored in the memory 206, in order to carry out functions and operations of the control server 200.

The memory 206 may be one or more of a buffer, a flash memory, a hard drive, a removable media, a volatile memory, a non-volatile memory, a random access memory (RAM), or another suitable device. In a typical arrangement, the memory 206 may include a non-volatile memory for long term data storage and a volatile memory that functions as system memory for the control circuit 204. The memory 206 may exchange data with the control circuit 204 over a data bus. Accompanying control lines and an address bus between the memory 206 and the control circuit 204 also may be present.

Functions and operations of the control server 200 may be embodied in the form of executable logic routines (e.g., lines of code, software programs, etc.) that are stored on a non-transitory computer readable medium (e.g., the memory 206) of the control server 200 and are executed by the control circuit 204 (e.g., using the processor 208). Furthermore, the functions and operations of the control server 200 may be a stand-alone software application or form a part of a software application that carries out additional tasks related to the control server 200. The described functions and operations may be considered a method that the corresponding device is configured to carry out. Such a method will also be further discussed below in connection with Fig. 3. Also, while the described functions and operations may be implemented in software, such functionality may as well be carried out via dedicated hardware or firmware, or some combination of hardware, firmware and/or software.

### Operation of the control server

The control circuit 204 may execute an energy demand function 210. The energy demand function 210 may be configured to determine an energy demand for a first heat pump 110 among the heat pumps 110 to extract energy from the distribution grid 10. Note that in the context of the present disclosure, a reversable heat pump assembly 100 set in heating mode is to be seen as a heat pump 110. The energy demand is in this case a demand for the first heat pump 110 to extract heat from the distribution grid 10 and deposit the extracted heat in the heating circuit 140 the first heat pump 110 is connected to. The energy demand is typically received from heating circuit 140 the first heat pump 110 is connected to. Alternatively, or in combination, the energy demand function 210 is configured to determine an energy demand for a first cooling machine 120 among the cooling machines 120 to extract energy from the distribution grid 10. Note that in the context of the present disclosure, a reversable heat pump assembly 100 set in cooling mode is to be seen as a cooling machine 120.The energy demand is in this case a demand for the first cooling machine 120 to extract cold from the distribution grid 10 and deposit the extracted cold in the cooling circuit 150 the first cooling machine 120 is connected to. The energy demand is typically received from cooling circuit 150 the first cooling machine 120 is connected to.

The control circuit 204 may execute a demand compensating function 212. The demand compensating function 212 may be configured to determine a set of cooling machines 120 among the cooling machines 120 or a set of heat pumps 110 among the heat pumps 110 to which a respective control message is to be sent in order to compensate for the energy demand. Again, note that in the context of the present disclosure, a reversable heat pump assembly 100 set in cooling mode is to be seen as a cooling machine 120 and a reversable heat pump assembly 100 set in heating mode is to be seen as a heat pump 110. In case the energy demand is a demand for extracting heat by the first heat pump 110, the demand compensating function 212 is configured to determine a set of cooling machines 120 among the cooling machines 120 to which a respective control message is to be sent in order to compensate for the energy demand. The set of cooling machines 120 comprises one or more of the cooling machines connected to the distribution grid 10. In case the energy demand is a demand for extracting cold by the first cooling machine 120, the demand compensating function 212 is configured to determine a set of heat pumps 110 among the heat pumps 110 to which a respective control message is to be sent in order to compensate for the energy demand. The set of heat pumps 110 comprises one or more of the heat pumps 110 connected to the distribution grid 10. The demand compensating function 212 may be configured to determine the set of cooling machines 120 based on various parameters, such as one or more of: nearness between the first heat pump 110 and the respective cooling machine 120 among the plurality of cooling machines 120; and a priority of the respective cooling machine 120 among the plurality of cooling machines 120 and/or a priority of the first heat pump 110. The demand compensating function 212 may be configured to determine the set of heat pumps 110 based on various parameters, such as one or more of: nearness between the first cooling machine 120 and the respective heat pump 110 among the plurality of heat pumps 110; and a priority of the respective heat pump 110 among the plurality of heat pumps 110 and/or a priority of the first cooling machine 120. Such various parameters will be discussed in more detail below in connection with the step of determining S304 in the method 300 illustrated in Fig. 3. In order to avoid undue repletion reference is made to the below discussion.

The demand compensating function 212 may further be configured to generate a respective control message to each cooling machine 120 in the set of cooling machines 120 or a respective control message to each heat pump 110 in the set of heat pumps 110. The respective control message for a respective cooling machine 120 comprises data instructing the cooling machine 120 to extract cold from the distribution grid 10 to, at least partly, compensate for the energy demand for the first heat pump 110 to extract heat from the distribution grid 10. In case the set of cooling machines 120 comprises two or more cooling machines 120 the set of cooling machines 120 may be controlled to together compensate for the energy demand for the first heat pump 110 to extract heat from the distribution grid 10. The respective control message may comprise an instruction instructing the respective cooling machine to increase its outtake of energy, i.e. cold, from the distribution grid 10 independent from its present outtake of energy, i.e. cold, from the distribution grid 10. Hence, upon a control message is sent the respective cooling machine 120, the cooling machine 120 may be set to extract more cold from the distribution grid 10 than the local cooling circuit 150 to which the cooling machine 120 is connected is demanding. The respective control message for a respective heat pump 110 comprises data instructing the heat pump 110 to extract heat from the distribution grid 10 to, at least partly, compensate for the energy demand for the first cooling machine 120 to extract cold from the distribution grid 10. In case the set of heat pumps 110 comprises two or more heat pumps 110 the set of heat pumps 110 may be controlled to together compensate for the energy demand for the first cooling machine to extract cold from the distribution grid 10. The respective control message may comprise an instruction instructing the respective heat pump 110 to increase its outtake of energy, i.e. heat, from the distribution grid 10 independent from its present outtake of energy, i.e. heat, from the distribution grid 10. Hence, upon a control message is sent the respective heat pump 110, the heat pump 110 may be set to extract more heat from the distribution grid 10 than the local heating circuit 140 to which the heat pump 110 is connected is demanding.

In case a heat pump 110 or a cooling machine 120 determined to be part of a set of heat pumps 110 or part of a set of cooling machines 120 is a reversible heat pump assembly 100, the control message may further comprise instructions to set the reversible heat pump assembly 100 as a heat pump 110 or a cooling machine 120.

The control circuit 204 may execute a messaging function 214. The messaging function 214 may be configured to send the respective control message to the respective cooling machine 120 or the respective heat pump 110 is was generated for. The control message(s) may be sent by means of the transceiver 202.

Upon receipt of a control message, the heat pump 110 or cooling machine 120 receiving the control message may be set to operate in accordance with the instructions in the control message.

### Disclosure of the method

In connection with Fig. 3 a method 300 for controlling the district thermal energy distribution system 1 will be discussed. Specifically, the method 300 may be said to be for controlling one or more heat pumps 110 connected to the distribution grid 10 to, at least partly, compensate for an energy demand of a cooling machine 120 connected to the distribution grid 10. Alternatively, or in combination, the method 300 may be said to be for controlling one or more cooling machines 120 connected to the distribution grid 10 to, at least partly, compensate for an energy demand of a heat pump 110 connected to the distribution grid 10.

As illustrated in connection with Fig. 1, a specific building 5 may comprise one or more heat pump 110, cooling machine 120 and/or reversible heat pump assembly 100. Typically, the controlled heat pumps 110, cooling machines 120 and/or reversible heat pump assemblies 100 are distributed in different buildings 5. The acts may be performed in any suitable order.

The method may comprise receiving S302 an energy demand comprising information for extracting energy from the distribution grid 10. The energy demand is received at the control server 200. The energy demand may be an energy demand for a first heat pump 110 among the plurality of heat pumps 110 to extract energy from the distribution grid 10. In this case the energy demand is a demand for the first heat pump 110 to extract heat from the distribution grid 10. The energy demand is typically sent from a local heating circuit 140 connected to the first heat pump 110. Alternatively, or in combination, the energy demand may be an energy demand for a first cooling machine 120 among the plurality of cooling machines 120 to extract energy from the distribution grid 10. In this case the energy demand is a demand for the first cooling machine 120 to extract cold from the distribution grid 10. The energy demand is typically sent from a local cooling circuit 150 connected to the first cooling machine 120.

The method may comprise determining S304 a set of cooling machines 120 or a set of heat pumps 110 to which a respective control message is to be sent in order to compensate for the energy demand received. The set of cooling machines 120 may comprise one or more of the plurality of cooling machines 120 connected to the distribution grid 10. The set of heat pumps 110 may comprise one or more of the plurality of heat pumps 110 connected to the distribution grid 10. The act of determining S304 is typically performed at the control server 200. Again, note that in the context of the present disclosure, a reversable heat pump assembly 100 set in cooling mode is to be seen as a cooling machine 120 and a reversable heat pump assembly 100 set in heating mode is to be seen as a heat pump 110.

The determining S304 may be made based on a set of distances. The set of distances may comprise distances, along the distribution grid 10, between a connection of the first heat pump 110 to the distribution grid 10 and a connection of the respective cooling machine 120 to the distribution grid 10. The set of distances may comprise distances, along the distribution grid 10, between a connection of the first cooling machine 120 to the distribution grid 10 and a connection of the respective heat pump 110 to the distribution grid 10. The set of distances may be made available as known distances stored in a distance database. The distance database may be accessible by the control server 200. The distance database may comprise distances, along the distribution grid 10, from each specific heat pump 110 to each specific cooling machine 120 and vice versa. The one or more cooling machines 120 in the set of cooling machines 120 may be selected among the cooling machines 120 being at a distance, along the distribution grid 10, shorter than a threshold distance from the first heat pump 110. For example, the set of cooling machines 120 may comprise the one or more cooling machines 120 being closest to the first heat pump 110. The one or more heat pumps 110 in the set of heat pumps 110 may be selected among the heat pumps 110 being at a distance, along the distribution grid 10, shorter than a threshold distance from the first cooling machine 120. For example, the set of heat pumps 110 may comprise the one or more heat pumps 110 being closest to the first cooling machine 120.

Alternatively, or in combination, the determining S304 may be made based on a priority. Each heat pump 110 among the plurality of heat pumps 110 may be assigned a priority. Each cooling machine 120 among the plurality of cooling machines 120 may be assigned a priority. The priority for the heat pumps 110 and/or cooling machines 120 may be stored in a priority database. The priority database may be accessible by the control server 200. The priority may reflect an importance of the respective heat pump 110 and cooling machine 120. A specific heat pump 110 or cooling machine 120 having a priority above a specific importance level may not be selected to form part of the set of heat pumps 110 or the set of cooling machines 120. The importance level of the first heat pump 110 may be compared with the importance levels of the cooling machines 120. Only cooling machines 120 having an importance level below the importance level of the first heat pump 110 may be selected to form part of the set of cooling machines 120. Vice versa, the importance level of the first cooling machine may be compared with the importance levels of the heat pumps 110. Only heat pumps 110 having an importance level below the importance level of the first cooling machine 120 may be selected to form part of the set of heat pumps 110.

Alternatively, or in combination, the determining S304 may be made based on geographic location data pertaining to the first heat pump 110 and/or based on geographic location data pertaining to the first cooling machine 120. Geographic location data may e.g. be a geographic position, i.e. a latitude/longitude coordinate for the respective heat pump 110 and/or cooling machine 120. Geographic position for the plurality of heat pumps 110 and/or cooling machines 120 may be stored in a geographic position database. The geographic position database may be accessible by the control server 200. The one or more cooling machines 120 in the set of cooling machines 120 may be selected among the cooling machines 120 being within a threshold radius of geographic distance from the first heat pump 110. The one or more heat pumps 110 in the set of heat pumps 110 may be selected among the heat pumps 110 being within a threshold radius of geographic distance from the first cooling machine 120.

The method may further comprise generating S306 a respective control message for each cooling machine 120 in the set of cooling machines 120 and/or a respective control message for each heat pump 110 in the set of heat pumps 110. The act of generating S306 is typically performed at the control server 200. The respective control message for a respective cooling machine 120 comprises data instructing the cooling machine 120 to extract cold from the distribution grid 10 to, at least partly, compensate for the energy demand for the first heat pump 110 to extract heat from the distribution grid 10. In case the set of cooling machines 120 comprises two or more cooling machines 120 the set of cooling machines 120 may be controlled to together compensate for the energy demand for the first heat pump 110 to extract heat from the distribution grid 10. The respective control message may comprise an instruction instructing the respective cooling machine to increase its outtake of energy, i.e. cold, from the distribution grid 10 independent from its present outtake of energy, i.e. cold, from the distribution grid 10. Hence, upon a control message is sent the respective cooling machine 120, the cooling machine 120 may be set to extract more cold from the distribution grid 10 than the local cooling circuit 150 to which the cooling machine 120 is connected is demanding. The respective control message for a respective heat pump 110 comprises data instructing the heat pump 110 to extract heat from the distribution grid 10 to, at least partly, compensate for the energy demand for the first cooling machine 120 to extract cold from the distribution grid 10. In case the set of heat pumps 110 comprises two or more heat pumps 110 the set of heat pumps 110 may be controlled to together compensate for the energy demand for the first cooling machine to extract cold from the distribution grid 10. The respective control message may comprise an instruction instructing the respective heat pump 110 to increase its outtake of energy, i.e. heat, from the distribution grid 10 independent from its present outtake of energy, i.e. heat, from the distribution grid 10. Hence, upon a control message is sent the respective heat pump 110, the heat pump 110 may be set to extract more heat from the distribution grid 10 than the local heating circuit 140 to which the heat pump 110 is connected is demanding.

In case a heat pump 110 or a cooling machine 120 determined to be part of a set of heat pumps 110 or part of a set of cooling machines 120 is a reversible heat pump assembly 100, the control message may further comprise instructions to set the reversible heat pump assembly 100 as a heat pump 110 or a cooling machine 120.

The method may further comprise sending S308, to the respective cooling machine 120 and/or to the respective heat pump 110, the respective control message. Typically, the control message(s) is/are sent from the control server 200.

The method may further comprise receiving, at the respective cooling machine 120 and/or at the respective heat pump 110, the control message. The method may further comprise controlling S310 the respective cooling machine 120 and/or heat pump 110 based thereon the received control message.

The person skilled in the art realizes that the present invention by no means is limited to the preferred embodiments described above. On the contrary, many modifications and variations are possible within the scope of the appended claims.

For example, one or more of the databases discussed above may be comprised in the memory 206 of the control server 200. Further, two or more of the databases discussed above may be combined into a common database.

Moreover, a tap-hot water accumulator filling status of a tap-hot water accumulator being part of a local heating circuit 140 may be forming part of the priority of the heat pump 110 connected to the local heating circuit 140 comprising the tap-hot water accumulator. The status of a tap-hot water accumulator may be 0-100% filled. A heat pump 110 having a tap-hot water accumulator having a low status, e.g. a status of < 50%, may be set to start to compensate for an energy demand from a first cooling machine 120. Upon, the status of the tap-hot water accumulator is reaching 100% the heat pump 110 associated with the tap-hot water accumulator may be stopped and another heat pump may be used to compensate for the energy demand from the first cooling machine 120. Such another heat pump 110 may be another heat pump being associated with a tap-hot water accumulator having a low status.

Furthermore, heat pumps 110 and/or cooling machines 120 may be prioritized based on a type of building the heat pump 110 or cooling machine 120 is associated with. For example, a heat pump 110 or cooling machine 120 associated with a highly prioritized building, e.g. a hospital, a kindergarten or an elder housing, may be set to vary indoor climate temperature by maximum +/- 0.5°C from a preset indoor climate temperature. According to another example, a heat pump 110 or cooling machine 120 associated with a medium prioritized building, e.g. an office building during office working hours or a residential building, may be set to vary indoor climate temperature by maximum +/- 1.0°C from a preset indoor climate temperature. According to yet another example, a heat pump 110 or cooling machine 120 associated with a low prioritized building, e.g. an office building outside normal working hours or a storage facility, may be set to vary indoor climate temperature by maximum +/- 5.0°C from a preset indoor climate temperature. Hence, a specific building, and hence a specific heat pump 110 or cooling machine 120, may be prioritized differently depending on a time of the day. By prioritizing heat pumps 110 and/or cooling machines 120 associated with different types of building differently facilitates vast opportunities to make use of building inertia for local balancing.

Additionally, variations to the disclosed embodiments can be understood and effected by the skilled person in practicing the claimed invention which is defined in the appended claims.

## Claims

1. A method for controlling a district thermal energy distribution system (1), the thermal energy distribution system (1) comprising:
a distribution grid (10) for a fluid-based distribution of heating and cooling, the distribution grid (10) comprising a hot conduit (12) configured to allow heat transfer fluid of a first temperature to flow therethrough and a cold conduit (14) configured to allow heat transfer fluid of a second temperature to flow therethrough, the second temperature is lower than the first temperature;
a control server (200);
a plurality of heat pumps (110) connected to the distribution grid (10), each heat pump (110) being configured to transfer heat from a primary side (112) thereof to a secondary side (114) thereof, the primary side (112) being configured to allow a flow of heat transfer fluid from the hot conduit (12) of the distribution grid (10) to the cold conduit (14) of the distribution grid (10), and the secondary side (114) being configured to allow heat transfer fluid of a local heating circuit (140) to flow therethrough; and
a plurality of cooling machines (120) connected to the distribution grid (10), each cooling machines (120) being configured to transfer heat from a secondary side (124) thereof to a primary side (122) thereof, the primary side (122) being configured to allow a flow of heat transfer fluid from the cold conduit (14) of the distribution grid (10) to the hot conduit (12) of the distribution grid (10), and the secondary side (124) being configured to allow heat transfer fluid of a local cooling circuit (150) to flow therethrough; wherein the method is **characterized in that** it comprises:
receiving, at the control server (200), an energy demand for a first heat pump (110) among the plurality of heat pumps (110) or a first cooling machine (120) among the plurality of cooling machines (120) to extract energy from the distribution grid (10);
determining, at the control server (200), a set of cooling machines (120) among the plurality of cooling machines (120) or a set of heat pumps (110) among the plurality of heat pumps (110) to which a respective control message is to be sent in order to compensate for the energy demand received;
generating, at the control server (200), a respective control message for each cooling machine in the set of cooling machines or a respective control message for each heat pump in the set of heat pumps, wherein the respective control message comprises data instructing the respective cooling machine (120) to extract cold from the distribution grid (10) to compensate, at least partly, for the energy demand for the first heat pump (110) to extract heat from the distribution grid (10), or comprises data instructing the respective heat pump (110) to extract heat from the distribution grid (10) to compensate, at least partly, for the energy demand for the first cooling machine to extract cold from the distribution grid (10); and
sending, from the control server (200) and to the respective cooling machine (120) or to the respective heat pump (110), the respective control message.

2. The method according to claim 1, wherein the step of determining the set of cooling machines (120) to which a respective control message is to be sent is made based on a distance along the distribution grid (10) between a connection of the first heat pump (110) to the distribution grid (10) and a connection of the respective cooling machine (120) to the distribution grid (10) or wherein the step of determining the set of heat pumps (110) to which a respective control message is to be sent is made based on a distance along the distribution grid (10) between a connection of the first cooling machine (120) to the distribution grid (10) and a connection of the respective heat pump (110) to the distribution grid (10).

3. The method according to claim 2, wherein the one or more cooling machines (120) in the set of cooling machines (120) is/are selected among the cooling machines (120) being at a distance along the distribution grid (10) shorter than a threshold distance, or wherein the one or more heat pumps (110) in the set of heat pumps (110) is/are selected among the heat pumps (110) being at a distance along the distribution grid (10) shorter than a threshold distance.

4. The method according to any one of claims 1-3, wherein the step of determining the set of cooling machines (120) to which a respective control message is to be sent is made based on a priority set to each of the plurality of cooling machine (120), or wherein the step of determining the set of heat pumps (110) to which a respective control message is to be sent is made based on a priority set to each of the plurality of heat pumps (110).

5. The method according to any one of claims 1-4, wherein the step of determining the set of cooling machines (120) to which a respective control message is to be sent is made based on geographic location data pertaining to the first heat pump (110), or wherein the step of determining the set of heat pumps (110) to which a respective control message is to be sent is made based on geographic location data pertaining to the first cooling machine (120).

6. The method according to claim 5, wherein the one or more cooling machines (120) in the set of cooling machines (120) is/are selected among the cooling machines (120) being within a threshold radius of geographic distance from the first heat pump (110), or wherein the one or more heat pumps (110) in the set of heat pumps (110) is/are selected among the heat pumps (110) being within a threshold radius of geographic distance from the first cooling machine (120).

7. The method according to any one of claims 1-6, wherein the set of cooling machines comprises one or more of the plurality of cooling machines (120), and wherein the set of heat pumps (110) comprises one or more of the plurality of heat pumps (110).

8. The method according to any one of claims 1-7, wherein the respective control message comprises an instruction instructing the respective heat pump (110) or cooling machine (120) to increase its outtake of energy from the distribution grid (10) independent from its present outtake of energy from the distribution grid (10).

9. The method according to any one of claims 1-8, further comprising receiving, at the respective cooling machine (120) or at the respective heat pump (110), the control message and controlling the respective cooling machine (120) or heat pump (110) based thereon.

10. A non-transitory computer-readable storage medium having stored thereon instructions for implementing the method according to any one of claims 1-9, when executed on a device having processing capabilities.

11. A control server (200) configured for controlling a district thermal energy distribution system (1) comprising a distribution grid (10), a plurality of heat pumps (110) and a plurality of cooling machines (120) as defined in claim 1, the control server (200) being **characterized by:**
a transceiver (202) configured to communicate with the heat pumps (110) and/or cooling machines (120); and
a control circuit (204) configured to execute:
an energy demand function (210) configured to determine an energy demand, for a first heat pump (110) among the heat pumps (110) or a first cooling machine (120) among the cooling machines (120), to extract energy from the distribution grid (10),
a demand compensating function (212) configured to:
determine a set of cooling machines (120) among the cooling machines (120) or a set of heat pumps (110) among the heat pumps (110) to which a respective control message is to be sent in order to compensate for the energy demand, and
generate a respective control message to each cooling machine (120) in the set of cooling machines (120) or a respective control message to each heat pump (110) in the set of heat pumps (110), wherein the respective control message comprises data instructing the respective cooling machine (120) to extract cold from the distribution grid (10) to compensate, at least partly, for the energy demand for the first heat pump (110) to extract heat from the distribution grid (10), or comprises data instructing the respective heat pump (110) to extract heat from the distribution grid (10) to compensate, at least partly, for the energy demand for the first cooling machine to extract cold from the distribution grid (10); and
a messaging function (214) configured to, by means of the transceiver (202) send the respective control message to the respective cooling machine (120) or the respective heat pump (110).

12. A district thermal energy distribution system, comprising:
a distribution grid (10) for a fluid-based distribution of heating and cooling, the distribution grid (10) comprising a hot conduit (12) configured to allow heat transfer fluid of a first temperature to flow therethrough and a cold conduit (14) configured to allow heat transfer fluid of a second temperature to flow therethrough, the second temperature is lower than the first temperature;
a plurality of heat pumps (110) connected to the distribution grid (10), each heat pump (110) being configured to transfer heat from a primary side (112) thereof to a secondary side (114) thereof, the primary side (112) being configured to allow a flow of heat transfer fluid from the hot conduit (12) of the distribution grid (10) to the cold conduit (14) of the distribution grid (10), and the secondary side (114) being configured to allow heat transfer fluid of a local heating circuit (140) to flow therethrough; and
a plurality of cooling machines (120) connected to the distribution grid (10), each cooling machines (120) being configured to transfer heat from a secondary side (124) thereof to a primary side (122) thereof, the primary side (122) being configured to allow a flow of heat transfer fluid from the cold conduit (14) of the distribution grid (10) to the hot conduit (12) of the distribution grid (10), and the secondary side (124) being configured to allow heat transfer fluid of a local cooling circuit (150) to flow therethrough; and
a control server according to claim 11.

## Patentansprüche

1. Verfahren zur Steuerung eines Fernwärmeverteilungssystems (1), wobei das Fernwärmeverteilungssystem (1) umfasst:
ein Verteilungsnetz (10) für eine fluidbasierte Verteilung von Heizung und Kühlung, wobei das Verteilungsnetz (10) eine Warmleitung (12), die dafür ausgelegt ist zu ermöglichen, dass Wärmeübertragungsfluid mit einer ersten Temperatur sie durchströmt, und eine Kaltleitung (14), die dafür ausgelegt ist zu ermöglichen, dass Wärmeübertragungsfluid mit einer zweiten Temperatur sie durchströmt, umfasst, wobei die zweite Temperatur niedriger als die erste Temperatur ist;
einen Steuerserver (200);
mehrere Wärmepumpen (110), die an das Verteilungsnetz (10) angeschlossen sind, wobei jede Wärmepumpe (110) dafür ausgelegt ist, Wärme von einer Primärseite (112) derselben zu einer Sekundärseite (114) derselben zu übertragen, wobei die Primärseite (112) dafür ausgelegt ist, einen Strom von Wärmeübertragungsfluid von der Warmleitung (12) des Verteilungsnetzes (10) zur Kaltleitung (14) des Verteilungsnetzes (10) zu ermöglichen, und die Sekundärseite (114) dafür ausgelegt ist zu ermöglichen, dass Wärmeübertragungsfluid eines lokalen Heizkreises (140) sie durchströmt; und
mehrere Kältemaschinen (120), die an das Verteilungsnetz (10) angeschlossen sind, wobei jede Kältemaschine (120) dafür ausgelegt ist, Wärme von einer Sekundärseite (124) derselben zu einer Primärseite (122) derselben zu übertragen, wobei die Primärseite (122) dafür ausgelegt ist, einen Strom von Wärmeübertragungsfluid von der Kaltleitung (14) des Verteilungsnetzes (10) zur Warmleitung (12) des Verteilungsnetzes (10) zu ermöglichen, und die Sekundärseite (124) dafür ausgelegt ist zu ermöglichen, dass Wärmeübertragungsfluid eines lokalen Kühlkreises (150) sie durchströmt;
wobei das Verfahren **dadurch gekennzeichnet ist, dass** es umfasst:
Empfangen, am Steuerserver (200), eines Energiebedarfs für eine erste Wärmepumpe (110) aus den mehreren Wärmepumpen (110) oder eine erste Kältemaschine (120) aus den mehreren Kältemaschinen (120), um Energie aus dem Verteilungsnetz (10) zu entnehmen;
Bestimmen, am Steuerserver (200), einer Menge von Kältemaschinen (120) aus den mehreren Kältemaschinen (120) oder einer Menge von Wärmepumpen (110) aus den mehreren Wärmepumpen (110), an die eine jeweilige Steuernachricht gesendet werden soll, um den empfangenen Energiebedarf zu kompensieren;
Erzeugen, am Steuerserver (200), einer jeweiligen Steuernachricht für jede Kältemaschine in der Menge von Kältemaschinen oder einer jeweiligen Steuernachricht für jede Wärmepumpe in der Menge von Wärmepumpen, wobei die jeweilige Steuernachricht Daten umfasst, welche die jeweilige Kältemaschine (120) anweisen, Kälte aus dem Verteilungsnetz (10) zu entnehmen, um den Energiebedarf für die erste Wärmepumpe (110), um Wärme aus dem Verteilungsnetz (10) zu entnehmen, wenigstens teilweise zu kompensieren, oder Daten umfasst, welche die jeweilige Wärmepumpe (110) anweisen, Wärme aus dem Verteilungsnetz (10) zu entnehmen, um den Energiebedarf für die erste Kältemaschine, um Kälte aus dem Verteilungsnetz (10) zu entnehmen, wenigstens teilweise zu kompensieren; und
Senden, vom Steuerserver (200) und an die jeweilige Kältemaschine (120) oder an die jeweilige Wärmepumpe (110), der jeweiligen Steuernachricht.

2. Verfahren nach Anspruch 1, wobei der Schritt des Bestimmens der Menge von Kältemaschinen (120), an die eine jeweilige Steuernachricht gesendet werden soll, basierend auf einem Abstand entlang des Verteilungsnetzes (10) zwischen einem Anschluss der ersten Wärmepumpe (110) an das Verteilungsnetz (10) und einem Anschluss der jeweiligen Kältemaschine (120) an das Verteilungsnetz (10) durchgeführt wird oder wobei der Schritt des Bestimmens der Menge von Wärmepumpen (110), an die eine jeweilige Steuernachricht gesendet werden soll, basierend auf einem Abstand entlang des Verteilungsnetzes (10) zwischen einem Anschluss der ersten Kältemaschine (120) an das Verteilungsnetz (10) und einem Anschluss der jeweiligen Wärmepumpe (110) an das Verteilungsnetz (10) durchgeführt wird.

3. Verfahren nach Anspruch 2, wobei die ein oder mehreren Kältemaschinen (120) in der Menge von Kältemaschinen (120) aus den Kältemaschinen (120) ausgewählt wird/werden, die sich in einem Abstand entlang des Verteilungsnetzes (10) befinden, der kürzer als ein Schwellenwertabstand ist, oder wobei die ein oder mehreren Wärmepumpen (110) in der Menge von Wärmepumpen (110) aus den Wärmepumpen (110) ausgewählt wird/werden, die sich in einem Abstand entlang des Verteilungsnetzes (10) befinden, der kürzer als ein Schwellenwertabstand ist.

4. Verfahren nach einem der Ansprüche 1-3, wobei der Schritt des Bestimmens der Menge von Kältemaschinen (120), an die eine jeweilige Steuernachricht gesendet werden soll, basierend auf einer Priorität durchgeführt wird, die für jede der mehreren Kältemaschinen (120) festgelegt ist, oder wobei der Schritt des Bestimmens der Menge von Wärmepumpen (110), an die eine jeweilige Steuernachricht gesendet werden soll, basierend auf einer Priorität durchgeführt wird, die für jede der mehreren Wärmepumpen (110) festgelegt ist.

5. Verfahren nach einem der Ansprüche 1-4, wobei der Schritt des Bestimmens der Menge von Kältemaschinen (120), an die eine jeweilige Steuernachricht gesendet werden soll, basierend auf Geolokationsdaten durchgeführt wird, die zu der ersten Wärmepumpe (110) gehören, oder wobei der Schritt des Bestimmens der Menge von Wärmepumpen (110), an die eine jeweilige Steuernachricht gesendet werden soll, basierend auf Geolokationsdaten durchgeführt wird, die zu der ersten Kältemaschine (120) gehören.

6. Verfahren nach Anspruch 5, wobei die ein oder mehreren Kältemaschinen (120) in der Menge von Kältemaschinen (120) aus den Kältemaschinen (120) ausgewählt wird/werden, die sich innerhalb eines Schwellenwertradius des geographischen Abstands von der ersten Wärmepumpe (110) befinden, oder wobei die ein oder mehreren Wärmepumpen (110) in der Menge von Wärmepumpen (110) aus den Wärmepumpen (110) ausgewählt wird/werden, die sich innerhalb eines Schwellenwertradius des geographischen Abstands von der ersten Kältemaschine (120) befinden.

7. Verfahren nach einem der Ansprüche 1-6, wobei die Menge von Kältemaschinen eine oder mehrere der mehreren Kältemaschinen (120) umfasst und wobei die Menge von Wärmepumpen (110) eine oder mehrere der mehreren Wärmepumpen (110) umfasst.

8. Verfahren nach einem der Ansprüche 1-7, wobei die jeweilige Steuernachricht eine Anweisung umfasst, welche die jeweilige Wärmepumpe (110) oder Kältemaschine (120) anweist, ihre Entnahme von Energie aus dem Verteilungsnetz (10) unabhängig von ihrer gegenwärtigen Entnahme von Energie aus dem Verteilungsnetz (10) zu erhöhen.

9. Verfahren nach einem der Ansprüche 1-8, welches ferner das Empfangen, an der jeweiligen Kältemaschine (120) oder an der jeweiligen Wärmepumpe (110), der Steuernachricht und das Steuern der jeweiligen Kältemaschine (120) oder Wärmepumpe (110) basierend darauf umfasst.

10. Nichtflüchtiges computerlesbares Speichermedium mit darauf gespeicherten Anweisungen zum Implementieren des Verfahrens nach einem der Ansprüche 1-9, wenn sie auf einer Vorrichtung mit Verarbeitungsfähigkeiten ausgeführt werden.

11. Steuerserver (200), welcher dafür ausgelegt ist, ein Fernwärmeverteilungssystem (1) zu steuern, das ein Verteilungsnetz (10), mehrere Wärmepumpen (110) und mehrere Kältemaschinen (120), wie in Anspruch 1 definiert, umfasst, wobei der Steuerserver (200) **gekennzeichnet ist durch**:
einen Sendeempfänger (202), der dafür ausgelegt ist, mit den Wärmepumpen (110) und/oder Kältemaschinen (120) zu kommunizieren; und
eine Steuerschaltung (204), die dafür ausgelegt ist auszuführen:
eine Energiebedarfsfunktion (210), die dafür ausgelegt ist, einen Energiebedarf für eine erste Wärmepumpe (110) aus den Wärmepumpen (110) oder eine erste Kältemaschine (120) aus den Kältemaschinen (120), um Energie aus dem Verteilungsnetz (10) zu entnehmen, zu bestimmen,
eine Bedarfskompensationsfunktion (212), die dafür ausgelegt ist:
eine Menge von Kältemaschinen (120) aus den mehreren Kältemaschinen (120) oder eine Menge von Wärmepumpen (110) aus den Wärmepumpen (110) zu bestimmen, an die eine jeweilige Steuernachricht gesendet werden soll, um den Energiebedarf zu kompensieren, und
eine jeweilige Steuernachricht an jede Kältemaschine (120) in der Menge von Kältemaschinen (120) oder eine jeweilige Steuernachricht an jede Wärmepumpe (110) in der Menge von Wärmepumpen (110) zu erzeugen, wobei die jeweilige Steuernachricht Daten umfasst, welche die jeweilige Kältemaschine (120) anweisen, Kälte aus dem Verteilungsnetz (10) zu entnehmen, um den Energiebedarf für die erste Wärmepumpe (110), um Wärme aus dem Verteilungsnetz (10) zu entnehmen, wenigstens teilweise zu kompensieren, oder Daten umfasst, welche die jeweilige Wärmepumpe (110) anweisen, Wärme aus dem Verteilungsnetz (10) zu entnehmen, um den Energiebedarf für die erste Kältemaschine, um Kälte aus dem Verteilungsnetz (10) zu entnehmen, wenigstens teilweise zu kompensieren; und
eine Benachrichtigungsfunktion (214), die dafür ausgelegt ist, mittels des Sendeempfängers (202) die jeweilige Steuernachricht an die jeweilige Kältemaschine (120) oder die jeweilige Wärmepumpe (110) zu senden.

12. Fernwärmeverteilungssystem, umfassend:
ein Verteilungsnetz (10) für eine fluidbasierte Verteilung von Heizung und Kühlung, wobei das Verteilungsnetz (10) eine Warmleitung (12), die dafür ausgelegt ist zu ermöglichen, dass Wärmeübertragungsfluid mit einer ersten Temperatur sie durchströmt, und eine Kaltleitung (14), die dafür ausgelegt ist zu ermöglichen, dass Wärmeübertragungsfluid mit einer zweiten Temperatur sie durchströmt, umfasst, wobei die zweite Temperatur niedriger als die erste Temperatur ist;
mehrere Wärmepumpen (110), die an das Verteilungsnetz (10) angeschlossen sind, wobei jede Wärmepumpe (110) dafür ausgelegt ist, Wärme von einer Primärseite (112) derselben zu einer Sekundärseite (114) derselben zu übertragen, wobei die Primärseite (112) dafür ausgelegt ist, einen Strom von Wärmeübertragungsfluid von der Warmleitung (12) des Verteilungsnetzes (10) zur Kaltleitung (14) des Verteilungsnetzes (10) zu ermöglichen, und die Sekundärseite (114) dafür ausgelegt ist zu ermöglichen, dass Wärmeübertragungsfluid eines lokalen Heizkreises (140) sie durchströmt; und
mehrere Kältemaschinen (120), die an das Verteilungsnetz (10) angeschlossen sind, wobei jede Kältemaschine (120) dafür ausgelegt ist, Wärme von einer Sekundärseite (124) derselben zu einer Primärseite (122) derselben zu übertragen, wobei die Primärseite (122) dafür ausgelegt ist, einen Strom von Wärmeübertragungsfluid von der Kaltleitung (14) des Verteilungsnetzes (10) zur Warmleitung (12) des Verteilungsnetzes (10) zu ermöglichen, und die Sekundärseite (124) dafür ausgelegt ist zu ermöglichen, dass Wärmeübertragungsfluid eines lokalen Kühlkreises (150) sie durchströmt; und
einen Steuerserver nach Anspruch 11.

## Revendications

1. Procédé de commande d'un système de distribution d'énergie thermique urbain (1), le système de distribution d'énergie thermique urbain (1) comprenant :
un réseau de distribution (10) pour une distribution de chauffage et de refroidissement à base de fluide, le réseau de distribution (10) comprenant un conduit chaud (12) configuré pour permettre à un fluide caloporteur à une première température de s'écouler à travers celui-ci et un conduit froid (14) configuré pour permettre à un fluide caloporteur à une deuxième température de s'écouler à travers celui-ci, la deuxième température étant inférieure à la première température ;
un serveur de commande (200) ;
une pluralité de pompes à chaleur (110) raccordées au réseau de distribution (10), chaque pompe à chaleur (110) étant configurée pour transférer de la chaleur à partir d'un côté primaire (112) de celle-ci vers un côté secondaire (114) de celle-ci, le côté primaire (112) étant configuré pour permettre un écoulement de fluide caloporteur à partir du conduit chaud (12) du réseau de distribution (10) vers le conduit froid (14) du réseau de distribution (10), et le côté secondaire (114) étant configuré pour permettre à un fluide caloporteur d'un circuit de chauffage local (140) de s'écouler à travers celui-ci ; et
une pluralité de machines de refroidissement (120) raccordées au réseau de distribution (10), chaque machine de refroidissement (120) étant configurée pour transférer de la chaleur à partir d'un côté secondaire (124) de celle-ci vers un côté primaire (122) de celle-ci, le côté primaire (122) étant configuré pour permettre un écoulement de fluide caloporteur à partir du conduit froid (14) du réseau de distribution (10) vers le conduit chaud (12) du réseau de distribution (10), et le côté secondaire (124) étant configuré pour permettre à un fluide caloporteur d'un circuit de refroidissement local (150) de s'écouler à travers celui-ci ;
dans lequel le procédé est **caractérisé en ce qu'**il comprend :
la réception, au niveau du serveur de commande (200), d'une demande d'énergie visant à demander à une première pompe à chaleur (110) parmi la pluralité de pompes à chaleur (110) ou à une première machine de refroidissement (120) parmi la pluralité de machines de refroidissement (120) d'extraire de l'énergie à partir du réseau de distribution (10) ;
la détermination, au niveau du serveur de commande (200), d'un ensemble de machines de refroidissement (120) parmi la pluralité de machines de refroidissement (120) ou d'un ensemble de pompes à chaleur (110) parmi la pluralité de pompes à chaleur (110), auquel un message de commande respectif doit être envoyé afin de répondre à la demande d'énergie reçue ;
la génération, au niveau du serveur de commande (200), d'un message de commande respectif pour chaque machine de refroidissement dans l'ensemble de machines de refroidissement ou d'un message de commande respectif pour chaque pompe à chaleur dans l'ensemble de pompes à chaleur, dans lequel le message de commande respectif comprend des données ordonnant à la machine de refroidissement (120) respective d'extraire du froid à partir du réseau de distribution (10) afin de répondre au moins partiellement à la demande d'énergie visant à demander à la première pompe à chaleur (110) d'extraire de la chaleur à partir du réseau de distribution (10), ou comprend des données ordonnant à la pompe à chaleur (110) respective d'extraire de la chaleur à partir du réseau de distribution (10) pour répondre au moins partiellement à la demande d'énergie visant à demander à la première machine de refroidissement d'extraire du froid à partir du réseau de distribution (10) ; et
l'envoi, à partir du serveur de commande (200) et à la machine de refroidissement (120) respective ou à la pompe à chaleur (110) respective, du message de commande respectif.

2. Procédé selon la revendication 1, dans lequel l'étape de détermination de l'ensemble de machines de refroidissement (120) auquel un message de commande respectif doit être envoyé est exécutée sur la base d'une distance le long du réseau de distribution (10), entre une connexion de la première pompe à chaleur (110) au réseau de distribution (10) et une connexion de la machine de refroidissement (120) respective au réseau de distribution (10), ou dans lequel l'étape de détermination de l'ensemble de pompes à chaleur (110) auquel un message de commande respectif doit être envoyé est exécutée sur la base d'une distance le long du réseau de distribution (10), entre une connexion de la première machine de refroidissement (120) au réseau de distribution (10) et une connexion de la pompe à chaleur (110) respective au réseau de distribution (10).

3. Procédé selon la revendication 2, dans lequel la ou les machines de refroidissement (120) dans l'ensemble de machines de refroidissement (120) est/sont sélectionnée(s) parmi les machines de refroidissement (120) situées à une distance plus courte qu'une distance seuil le long du réseau de distribution (10), ou dans lequel la ou les pompes à chaleur (110) dans l'ensemble de pompes à chaleur (110) est/sont sélectionnée(s) parmi les pompes à chaleur (110) situées à une distance plus courte qu'une distance seuil le long du réseau de distribution (10).

4. Procédé selon l'une quelconque des revendications 1 à 3, dans lequel l'étape de détermination de l'ensemble de machines de refroidissement (120) auquel un message de commande respectif doit être envoyé est exécutée sur la base d'une priorité définie pour chacune parmi la pluralité de machines de refroidissement (120), ou dans lequel l'étape de détermination de l'ensemble de pompes à chaleur (110) auquel un message de commande respectif doit être envoyé est exécutée sur la base d'une priorité définie pour chacune parmi la pluralité de pompes à chaleur (110).

5. Procédé selon l'une quelconque des revendications 1 à 4, dans lequel l'étape de détermination de l'ensemble de machines de refroidissement (120) auquel un message de commande respectif doit être envoyé est exécutée sur la base de données de localisation géographique relatives à la première pompe à chaleur (110), ou dans lequel l'étape de détermination de l'ensemble de pompes à chaleur (110) auquel un message de commande respectif doit être envoyé est exécutée sur la base de données de localisation géographique relatives à la première machine de refroidissement (120).

6. Procédé selon la revendication 5, dans lequel la ou les machines de refroidissement (120) dans l'ensemble de machines de refroidissement (120) est/sont sélectionnée(s) parmi les machines de refroidissement (120) situées dans un rayon seuil de distance géographique par rapport à la première pompe à chaleur (110), ou dans lequel la ou les pompes à chaleur (110) dans l'ensemble de pompes à chaleur (110) est/sont sélectionnée(s) parmi les pompes à chaleur (110) situées dans un rayon seuil de distance géographique par rapport à la première machine de refroidissement (120).

7. Procédé selon l'une quelconque des revendications 1 à 6, dans lequel l'ensemble de machines de refroidissement comprend une ou plusieurs de la pluralité de machines de refroidissement (120) et dans lequel l'ensemble de pompes à chaleur (110) comprend une ou plusieurs de la pluralité de pompes à chaleur (110).

8. Procédé selon l'une quelconque des revendications 1 à 7, dans lequel le message de commande respectif comprend une instruction ordonnant à la pompe à chaleur (110) ou à la machine de refroidissement (120) respective d'augmenter son extraction d'énergie à partir du réseau de distribution (10) indépendamment de son extraction d'énergie actuelle à partir du réseau de distribution (10).

9. Procédé selon l'une quelconque des revendications 1 à 8, comprenant en outre la réception du message de commande au niveau de la machine de refroidissement (120) respective ou de la pompe à chaleur (110) respective, et la commande de la machine de refroidissement (120) ou de la pompe à chaleur (110) respective sur la base de celui-ci.

10. Support de stockage non transitoire lisible par ordinateur, sur lequel sont stockées des instructions destinées à mettre en œuvre le procédé selon l'une quelconque des revendications 1 à 9, lorsqu'elles sont exécutées sur un dispositif doté de capacités de traitement.

11. Serveur de commande (200) configuré pour commander un système de distribution d'énergie thermique urbain (1) comprenant un réseau de distribution (10), une pluralité de pompes à chaleur (110) et une pluralité de machines de refroidissement (120) selon la revendication 1, le serveur de commande (200) étant **caractérisé par** :
un émetteur-récepteur (202) configuré pour communiquer avec les pompes à chaleur (110) et/ou les machines de refroidissement (120) ; et
un circuit de commande (204) configuré pour exécuter :
une fonction de demande d'énergie (210) configurée pour déterminer une demande d'énergie visant à demander à une première pompe à chaleur (110) parmi les pompes à chaleur (110) ou à une première machine de refroidissement (120) parmi les machines de refroidissement (120) d'extraire de l'énergie à partir du réseau de distribution (10),
une fonction de réponse à une demande (212) configurée pour :
déterminer un ensemble de machines de refroidissement (120) parmi les machines de refroidissement (120) ou un ensemble de pompes à chaleur (110) parmi les pompes à chaleur (110), auquel un message de commande respectif doit être envoyé afin de répondre à la demande d'énergie, et
générer un message de commande respectif pour chaque machine de refroidissement (120) dans l'ensemble de machines de refroidissement (120) ou un message de commande respectif pour chaque pompe à chaleur (110) dans l'ensemble de pompes à chaleur (110), dans lequel le message de commande respectif comprend des données ordonnant à la machine de refroidissement (120) respective d'extraire du froid à partir du réseau de distribution (10) afin de répondre au moins partiellement à la demande d'énergie visant à demander à la première pompe à chaleur (110) d'extraire de la chaleur à partir du réseau de distribution (10), ou comprend des données ordonnant à la pompe à chaleur (110) respective d'extraire de la chaleur à partir du réseau de distribution (10) pour répondre au moins partiellement à la demande d'énergie visant à demander à la première machine de refroidissement d'extraire du froid à partir du réseau de distribution (10) ; et
une fonction de messagerie (214) configurée pour envoyer, au moyen de l'émetteur-récepteur (202), le message de commande respectif à la machine de refroidissement (120) respective ou à la pompe à chaleur (110) respective.

12. Système de distribution d'énergie thermique urbain, comprenant :
un réseau de distribution (10) pour une distribution de chauffage et de refroidissement à base de fluide, le réseau de distribution (10) comprenant un conduit chaud (12) configuré pour permettre à un fluide caloporteur à une première température de s'écouler à travers celui-ci et un conduit froid (14) configuré pour permettre à un fluide caloporteur à une deuxième température de s'écouler à travers celui-ci, la deuxième température étant inférieure à la première température ;
une pluralité de pompes à chaleur (110) raccordées au réseau de distribution (10), chaque pompe à chaleur (110) étant configurée pour transférer de la chaleur à partir d'un côté primaire (112) de celle-ci vers un côté secondaire (114) de celle-ci, le côté primaire (112) étant configuré pour permettre un écoulement de fluide caloporteur à partir du conduit chaud (12) du réseau de distribution (10) vers le conduit froid (14) du réseau de distribution (10), et le côté secondaire (114) étant configuré pour permettre à un fluide caloporteur d'un circuit de chauffage local (140) de s'écouler à travers celui-ci ; et
une pluralité de machines de refroidissement (120) raccordées au réseau de distribution (10), chaque machine de refroidissement (120) étant configurée pour transférer de la chaleur à partir d'un côté secondaire (124) de celle-ci vers un côté primaire (122) de celle-ci, le côté primaire (122) étant configuré pour permettre un écoulement de fluide caloporteur à partir du conduit froid (14) du réseau de distribution (10) vers le conduit chaud (12) du réseau de distribution (10), et le côté secondaire (124) étant configuré pour permettre à un fluide caloporteur d'un circuit de refroidissement local (150) de s'écouler à travers celui-ci ;
un serveur de commande selon la revendication 11.
